# EUROPEAN PATENT APPLICATION

(11) **EP 1 517 310 A1**
(43) Date of publication of application: **23.03.2005**
(21) Application number: 04255076.4
(22) Date of filing: 24.08.2004
(51) Int. Cl.: G11B 7/007, G11B 7/005, G11B 20/10

(54) **Information recording medium, information recording/reproducing apparatus and information reproducing method**

(30) Priority: 26.08.2003 JP 2003301119
(71) Applicant: Pioneer Corporation, Meguro-ku, Tokyo (JP)
(72) Inventor: Kuroda, Kazuo, c/o Pioneer Corporation, Tokorozawa-shi Saitama (JP); Imamura, Akira, c/o Pioneer Corporation, Tokorozawa-shi Saitama (JP)
(74) Representative: Haley, Stephen

(57) **Abstract**

An optical disc (1) has a spiral standard locus. A groove (G) is formed as wobble which meanders or wobbles along the standard locus. The wobble is determined from a wobble signal (WB). The wobble signal is modulated such that a DC offset of the wobble signal is cancelled by a symbol unit of predetermined data, Therefore, in tracking servo upon reproducing, the position of an optical pickup (202) can be converged onto the amplitude center of the wobble in a short time.

## Description

### BACKGROUND OF THE INVENTION

### 1. Field of the Invention

The present invention relates to an information recording medium on which information is recorded by using a groove, an information recording/reproducing apparatus, and an information reproducing method.

### 2. Description of the Related Art

On an optical disc represented by a CD-R (Compact Disc-Recordable) and a DVD-R (DVD-Recordable), information for the recording operation of a recording apparatus, which modulates a groove to thereby record the information, is recorded in advance. However, in order to improve a SN (Signal to Noise ratio) after recording and/or in order to conceal and record (i) a key for copy control for the prevention of illegal copying and (ii) information for revoking, there is a request for reserving another recording area for the key and the information for revoking, aside from a recording area.

There is a known technique of recording the information by wobbling the position of the groove in the radial direction of the optical disc and performing spread spectrum with respect to the wobble (e.g. Japanese Patent Application Laying Open NO. 2003-22539).

This technique is such that a wobble signal is generated by performing the spread spectrum with respect to predetermined data with random data and that the position of the groove is wobbled according to the wobble signal. Since the frequency component of the wobble is expanded by the spread spectrum and the signal can be detected even in the low SN ratio, it is possible to reduce crosstalk from an adjacent track to some extent. At the same time, since the spread spectrum method is used, it is possible to improve the concealment of the data.

However, if the spread spectrum is performed by using the random data, "0" or "1" may continue longly or appear disproportionately with some probability. In this case, a record mark is formed at a position out of the center of the track. If such a groove on which the record mark is out of the center of the track is read, an optical pickup moves to follow the deviation of the groove, thereby to generate a tracking offset. As a result, when recording the data, or when reproducing the data recorded on the disc on which a mark pit is recorded by the information recording/reproducing apparatus, the following problems occur: e.g. tracking error by jumping to the adjacent track and the reduction of data reliability by crosstalk from the adjacent track. These are big problems, particularly in an optical disc with a high recording density and a narrow track pitch.

### SUMMARY OF THE INVENTION

It is therefore an object of the present invention, for example, to provide an information recording medium, as well as an information recording/reproducing apparatus and an information reproducing method, by which data reliability can be improved.

The present invention will be explained hereinafter. An information recording medium of the present invention may be disc-shaped and may comprise various optical discs, such as a CD Recordable (CD-R), a Digital Versatile Disc (DVD), and a DVD Recordable (DVD-R), for example.

The above object of the present invention can be achieved by an information recording medium on which a groove is formed at a displaced position to which the groove is displaced in a direction crossing a reading direction of the groove according to a wobble signal obtained by modulating predetermined data in a predetermined modulating method, wherein the wobble signal is modulated such that a DC offset of the wobble signal is cancelled by a symbol unit of the predetermined data.

According to the information recording medium of the present invention, on the information recording medium, a groove is formed at a displaced position to which the groove is displaced in a direction crossing the reading direction thereof, according to a wobble signal obtained by modulating predetermined data in the predetermined modulating method. The wobble signal is modulated such that a Direct Current (DC) offset of the wobble signal is cancelled by a symbol unit of the predetermined data.

It is possible to form a record mark on the groove. The record mark is a pit, for example, and first information is recorded by the variable length (i.e., the long or short length) of the record mark. The above-described predetermined information is second information different from the first information. The groove is formed in a meandering or wobbling way. The meandering or wobbling of the groove is referred to as the "wobble" and is determined from the wobble signal. Namely, the groove is formed at a displaced position to which the groove is displaced in a direction crossing the reading direction of the groove according to the wobble signal.

The spread spectrum data is randomized by the random data, but "0" or "1" continues or appears disproportionately with some probability. The wobble signal has such a waveform or frequency waveform that the DC offset of the wobble signal is canceled by a symbol unit of the spread spectrum data, If the record mark is formed according to the wobble signal, the tracking offset upon reproducing is dissolved or canceled by the symbol unit of the spread spectrum data. Therefore, tracking servo upon reproducing is capable of returning the position of an optical pickup to the amplitude center of the wobble in a short time. As a result, it is possible to reduce tracking error by jumping to an adjacent track and crosstalk from the adjacent track, thereby to improve data reliability.

In one aspect of the information recording medium of the present invention, the predetermined data is spread spectrum data obtained by performing spread spectrum modulation with respect to predetermined information.

By constracting in this manner, it is possible to increase the concealment of the predetermined information.

In another aspect of the information recording medium of the present invention, the predetermined modulating method is such that the wobble signal is generated by converting each symbol of the predetermined data into a frequency waveform corresponding to a symbol length of the each symbol.

In this aspect, it may be constructed such that the predetermined modulating method is such that the wobble signal is generated by converting each symbol of the predetermined data into a frequency waveform corresponding to a symbol length of the each symbol.

According to this aspect, since the predetermined modulating method is such that the wobble signal is generated so as to cancel the DC offset thereof by the symbol unit of the predetermined data, the DC offset is canceled in one frequency waveform within itself,

Moreover, in the above-described aspect related to each symbol of the predetermined data, the frequency waveform is a waveform with a duty ratio of 50% in which the symbol length of each symbol in the predetermined data is one cycle,

In this aspect, it is possible to cancel the DC offset by the symbol unit of the predetermined data and reduce the frequency of each frequency waveform.

Furthermore, in the above-described aspect related to each symbol of the predetermined data, the frequency waveform is reversed for each symbol in the predetermined data.

By constructing in this manner, it is possible to smooth individual waveforms generated for each symbol. This means that the wobble of the groove changes smoothly. Therefore, it is possible to improve tracking accuracy upon reproducing.

Alternatively, in the above described aspect in which the predetermined modulating method is such that a phase of the frequency waveform is determined according to each symbol value of the predetermined data, it may be constructed such that a phase of the frequency waveform determined according to each symbol value of the predetermined data is switched over according to a predetermined rule.

By constructing in this manner, since information cannot be reproduced as long as one knows the predetermined rule upon recording, it is possible to increase the concealment of the predetermined information recorded by the wobble,

In another aspect of the information recording medium of the present invention, the predetermined modulating method is such that the wobble signal is generated by converting each symbol of the predetermined data into a frequency waveform corresponding to a symbol length of the each symbol, and by combining frequency waveforms whose polarities are same to each other (e.g. waveform peaks or waveform bottoms) among the frequency waveforms adjacent to each other.

In this aspect, it is possible to reduce the frequency of the wobble and smooth the wobble. This makes it possible to improve tracking accuracy upon reproducing.

In another aspect of the information recording medium of the present invention, the predetermined modulating method is such that the wobble signal is generated by converting each symbol of the predetermined data into a frequency waveform corresponding to a symbol length and a symbol value of the each symbol.

According to this aspect, since the predetermined modulating method is such that the wobble signal is generated such that the DC offset thereof is cancelled by the symbol unit of the predetermined data, the DC offset is canceled in one frequency waveform within itself.

In another aspect of the information recording medium of the present invention, the predetermined modulating method is such that the wobble signal is generated by adjusting an amplitude of a predetermined frequency waveform according to each symbol value of the predetermined data.

In this aspect, the modulation may be performed by the presence or absence of the waveform and includes so-called Amplitude-Shift Keying (ASK) modulation. The predetermined frequency waveform corresponds to a carrier wave.

In another aspect of the information recording medium of the present invention, the predetermined modulating method is such that the wobble signal is generated by adjusting a phase of a predetermined frequency waveform according to each symbol value of the predetermined data.

In this aspect, the modulation includes so-called Phase-Shift Keying (PSK) modulation. The predetermined frequency waveform corresponds to a carrier wave.

According to the information recording medium as explained above, the wobble of the groove, which is formed on the information recording medium, is formed such that the DC offset of the wobble signal is canceled by the symbol unit of the predetermined data. Thus, it is possible to reduce crosstalk from an adjacent track, to thereby improve data reliability.

The above object of the present invention can be also achieved by an information recording/reproducing apparatus for recording a record mark onto the groove formed on the above-described information recording medium (including its various aspects) and reproducing the predetermined information from the information recording medium, the information recording/reproducing apparatus provided with: a reading device for reading the record mark from the groove recorded on the information recording medium; a wobble signal generating device for generating a wobble signal for indicating the displaced position of the groove on the basis of an output signal from the reading device; a spread spectrum data reproducing device for reproducing the spread spectrum data by demodulating the generated wobble signal in a predetermined demodulating method which makes a pair with the predetermined modulating method; and a spread spectrum data demodulating device for reproducing the predetermined information by performing inverse-spread spectrum modulation with respect to the reproduced spread spectrum data.

According to the information recording/reproducing apparatus of the present invention, the information recording/reproducing apparatus is intended to form the record mark onto the groove of the above-described information recording medium and reproduce the predetermined information recorded by the wobble from the above-described information recording medium. On the information recording medium, the groove is formed at a displaced position to which the groove is displaced in a direction crossing the reading direction of the groove according to a wobble signal obtained by further modulating spread spectrum data, which is obtained by performing spread spectrum modulation with respect to the predetermined information, in the predetermined modulating method in which a DC offset of the wobble signal is canceled by a symbol unit of the spread spectrum data. The information recording/reproducing apparatus is provided with: the reading device; the wobble signal generating device; the spread spectrum data reproducing device; and the spread spectrum data demodulating device. The reading device reads the record mark from the groove recorded on the information recording medium and outputs a read signal. The wobble signal generating device generates a wobble signal for indicating the displaced position of the groove on the basis of the read signal. The spread spectrum data reproducing device reproduces the spread spectrum data by demodulating the generated wobble signal in a predetermined demodulating method which makes a pair with the predetermined modulating method, The spread spectrum data demodulating device reproduces the spread spectrum data by performing inverse-spread spectrum modulation (i.e., performing back-spread or reverse-spread spectrum modulation) with respect to the spread spectrum data.

According to the information recording/reproducing apparatus, it reproduces the spread spectrum data by demodulating the wobble signal and reproduces the predetermined information by demodulating the spread spectrum data. Namely, it reproduces the predetermined information through two-step demodulation. Since the predetermined modulating method is such that the DC offset of the wobble signal is canceled by the symbol unit of the spread spectrum data, it is possible to improve tracking accuracy in reading the record mark from the groove, and it is possible to reproduce the predetermined information with high reliability.

In one aspect of the information recording/reproducing apparatus of the present invention, the predetermined modulating method is such that the wobble signal is generated by converting each symbol of the spread spectrum data into a frequency waveform having a frequency corresponding to a symbol length of the each symbol and having a phase corresponding to a symbol value of the each symbol, and the spread spectrum data reproducing device reproduces the spread spectrum data on the basis of the frequency and the phase of each frequency waveform constituting the wobble signal generated by the wobble signal generating device.

According to this aspect, it is possible to improve tracking accuracy in reading the record mark from the groove, and it is possible to reproduce the predetermined information with high reliability.

In another aspect of the information recording/reproducing apparatus of the present invention, the predetermined information includes a particular signal in a particular pattern, the predetermined modulating method is such that the wobble signal is generated by reversing, for each symbol, a waveform in which a symbol length of the each symbol of the spread spectrum data is one cycle, and the spread spectrum data demodulating device reproduces the predetermined information so that, by detecting a polarity of the particular signal included in the reproduced predetermined information, the detected polarity be a predetermined polarity.

If the wobble signal reversed for each symbol is used to record the predetermined information, even if the frequency waveforms can be distinguished in reproducing, it is not clear whether to make the distinguished frequency waveforms be in non-reverse rotation or in reverse rotation before outputting. According to this aspect, it is possible to accurately reproduce the predetermined information, by demodulating the spectrum spread data so that the polarity of the particular signal known in advance is correct.

In this aspect, it may be constructed such that the particular signal is a synchronization signal included in the predetermined information, and that the spread spectrum data demodulating device is provided with: a random data generating device for generating random data used for the spread spectrum modulation of the predetermined information; a reproduction data generating device for generating reproduction data by performing inverse-spread spectrum modulation with respect to the reproduced spread spectrum data on the basis of the generated random data; a polarity detecting device for detecting a polarity of the synchronization signal included in the reproduction data; and a polarity adjusting device for adjusting a polarity of the reproduction data so that the polarity of the synchronization signal be a predetermined polarity on the basis of the detection result of the detecting device, to thereby output the predetermined information.

According to this aspect, it is possible to accurately reproduce the predetermined information.

The above object of the present invention can be also achieved by an information reproducing method of reproducing predetermined information from an information recording medium, which is provided with a groove having a record mark formed thereon and on which the groove is formed at a displaced position to which the groove is displaced in a direction crossing a reading direction of the groove according to a wobble signal obtained by further modulating spread spectrum data, which is obtained by performing spread spectrum modulation with respect to the predetermined information, in a predetermined modulating method in which a DC offset of the wobble signal is canceled by a symbol unit of the spread spectrum data, the information reproducing method provided with: a reading process of reading the record mark from the groove recorded on the information recording medium; a wobble signal generating process of generating a wobble signal for indicating the displaced position of the groove on the basis of an output signal in the reading process; a spread spectrum data reproducing process of reproducing the spread spectrum data by demodulating the generated wobble signal in a predetermined demodulating method which makes a pair with the predetermined modulating method; and a spread spectrum data demodulating process of reproducing the predetermined information by performing inverse-spread spectrum modulation with respect to the reproduced spread spectrum data.

According to the information reproducing method, in the same manner as the above described information reproducing apparatus of the present invention, it is possible to improve tracking accuracy in reading the record mark from the groove, and it is possible to reproduce the predetermined information with high reliability.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram showing the outline structure of a mastering apparatus associated with an embodiment of the present invention;
FIG. 2 is an explanatory diagram showing the wobble of a groove formed on a master disc;
FIG. 3 is a cross-sectional perspective view showing the structure of an optical disc;
FIG. 4 is an explanatory diagram showing the data formats of pit mark data and spread spectrum source data;
FIG. 5 is a block diagram showing a first structural example of a wobble-signal generation circuit;
FIG. 6 is an explanatory diagram showing the memory content of a conversion table;
FIG. 7 is a timing chart of the wobble-signal generation circuit;
FIG. 8 is an explanatory diagram showing the data formats of pit mark data and spread spectrum source data, obtained if a phase group is sequentially changed in the demodulation of a wobble signal;
FIG. 9 is a block diagram showing a second structural example of the wobble-signal generation circuit;
FIG. 10 is an explanatory diagram showing the memory content of a conversion table;
FIG. 11 is a timing chart of the wobble-signal generation circuit shown in FIG. 9;
FIG. 12 is a block diagram showing a third structural example of the wobble-signal generation circuit and a timing chart thereof;
FIG. 13 is a block diagram showing a fourth structural example of the wobble-signal generation circuit and a timing chart thereof;
FIG. 14 is a block diagram showing the entire structure of an information recording/reproducing apparatus;
FIG. 15 is a block diagram showing the structure of a pit-data demodulation circuit;
FIG. 16 is a timing chart of a wobble signal, a binary signal, a first clock signal, a second clock signal, and a pit synchronization signal;
FIG. 17 is a block diagram showing a structural example of a spread-spectrum-data reproduction circuit;
FIG. 18 is a timing chart of a phase-symbol conversion circuit;
FIG. 19 is a timing chart of the spread-spectrum-data reproduction circuit corresponding to a wobble signal waveform;
FIG. 20 is a block diagram showing another structural example of the spread-spectrum-data reproduction circuit;
FIG. 21 is a timing chart of the spread-spectrum-data reproduction circuit shown in FIG. 20; and
FIG. 22 is a block diagram showing a spread spectrum demodulation circuit corresponding to a wobble signal waveform.

### DETAILED DESCRIPTION OF THE PREFERRED EMBODIMENTS

The preferred embodiments of the present invention will be explained with reference to the drawings hereinafter. In the embodiments, a DVD is taken and explained as one example of the information recording medium, but it is to be understood that the present invention is not limited to the embodiments.

### <1. Mastering Apparatus>

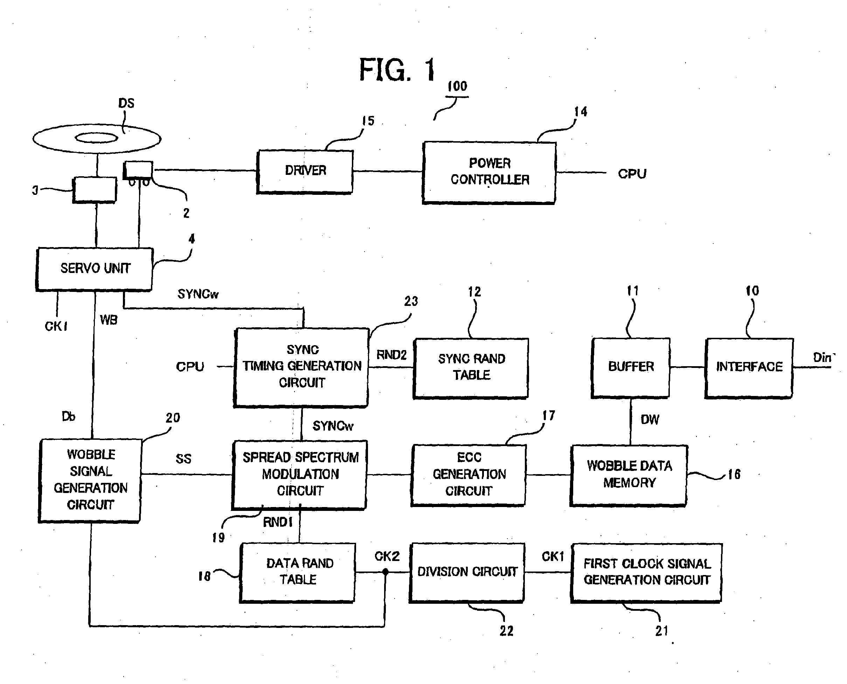

FIG. 1 shows the entire structure of a mastering apparatus. A mastering apparatus 100 is intended to make a master disc DS and is provided with: a recording unit 2; a spindle motor 3 for rotating the master disc DS; and a servo unit 4, The master disc DS is made as a glass master on which photoresist is applied, for example. The recording unit 2 is provided with: a laser diode for irradiating laser light; an optical system for focusing the laser light on the master disc DS; and a slider apparatus for moving the laser diode and the optical system as one body in the radial direction of the master disc DS. The laser diode emits the laser light with a power corresponding to a drive signal supplied from a driver 15. A power controller 14 controls the drive signal of the driver 15 according to an instruction from a Central Processing Unit (CPU). The slider apparatus moves the optical system and the laser diode in the radial direction of the master disc DS according to a control signal from the servo unit 4.

A first clock signal CK1 and a wobble synchronization signal SYNCw are supplied to the servo unit 4. In synchronization with these signals, the servo unit 4 performs spindle servo for controlling the rotation of the spindle motor 3, focus servo for controlling the focus of the laser light, and slide servo for controlling the slider apparatus. In the slide servo out of them, the control signal is generated by adding a wobble signal WB to a signal for forming a spiral standard locus or reference locus, and the slider apparatus is controlled by the control signal.

The first clock signal CK1 is generated by a first clock signal generation circuit 21. In the embodiment, the frequency of the first clock signal CK1 is 10.5 MHz. The first clock signal CK1 is a time reference for the entire system. A division circuit 22 frequency-divides the first clock signal CK1 and generates a second clock signal CK2 or the like. The frequency of the second clock signal CK2 is 420 KHz. The second clock signal CK2 is used for the generation of the wobble signal WB and is a time reference for it.

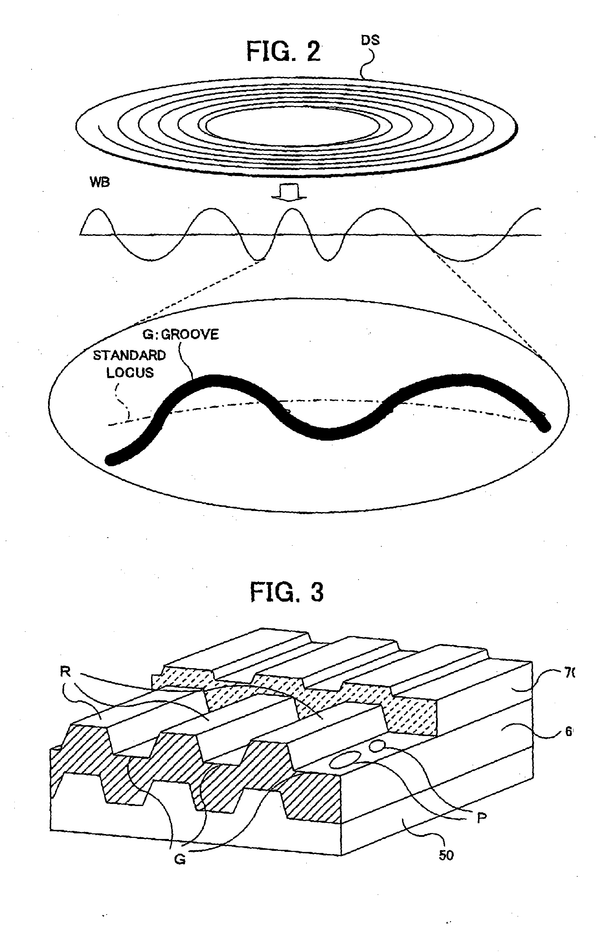

FIG. 2 shows a wobble formed on the master disc DS. The wobble is constructed from a groove G. The wobble is along the spiral standard locus, and the wobble, in close-up, meanders or wobbles in the direction crossing the standard locus. The wobble has a shape corresponding to the wobble signal WB.

The explanation is back now in FIG. 1. Input data Din is supplied from an external equipment to the mastering apparatus 100. The input data Din is taken into a buffer 11 through an interface 10. The input data Din taken into the buffer 11 is transferred to a wobble data memory 16 as wobble data DW, under the control of the CPU. The wobble data DW includes information for rotation control, information for recording, such as an address, and information for copy control for the prevention of illegal copying or the like, for example.

The wobble data DW stored in the wobble data memory 16 is read from there and supplied to an ECC generation circuit 17 under the control of the CPU. The ECC generation circuit 17 generates an error-correcting code ECCw on the basis of the wobble data DW and appends it to the wobble data DW, A random pattern used for the spread spectrum is stored on a data RAND table 18. The random pattern corresponds to a spread code and is a bit row generated by using a random function. The second clock signal CK2 is supplied to the data RAND table 18. The random pattern is read in synchronization with the second clock signal CK2. The read random pattern is supplied to a spread spectrum modulation circuit 19 as first random data RND1. After appending a wobble synchronization signal SYNCw to the wobble data DW, the spread spectrum modulation circuit 19 multiplies it with the first random data RND1, to thereby generate the spread spectrum data SS. The spread spectrum modulation circuit 19 can be constructed from an exclusive OR (XOR) circuit, for example.

The wobble synchronization signal SYNCw is generated by a SYNC timing generation circuit 23, under the control of the CPU. The SYNC timing generation circuit 23 uses second random data RND2 read from a sync RAND table 12, to thereby generate the randomized wobble synchronization signal SYNCw. Specifically, the SYNC timing generation circuit 23 multiplies a predetermined synchronization pattern with the second random data RND2, to thereby obtain the wobble synchronization signal SYNCw. Incidentally, it is possible to store a plurality of random patterns in the sync RAND table 12, select a random pattern according to a predetermined rule, and use the selected random pattern as the second random data RND2.

A wobble signal generation circuit 20 generates the wobble signal WB by applying a predetermined modulation to the spread spectrum data SS. The wobble signal WB is modulated such that a DC offset of the wobble signal WB is cancelled by a symbol unit of the spread spectrum data SS. The wobble signal generation circuit 20 will be described later in detail.

The master disc DS on which the groove G is formed by the mastering apparatus 100 is developed to be a resist master. After that, one metal master is made through an electroforming process of plating on the basis of the resist master, and then a plurality of mothers are made from the one metal master. Furthermore, a plurality of stampers are made from the plurality of mothers, An optical disc 1 is produced by pressing resin, such as plastic, by using the stamper,

FIG. 3 shows the structure of the optical disc 1, The optical disc 1 is provided with: a substrate 50; a recording layer 60; and a reflecting layer 70, which are laminated in this order from bottom to top. The substrate 50 has a concavo-concave shape formed thereon by the above-described stamper. The concavo-concave shape is based on the wobble. Then, the recording layer 60 is formed on the substrate 50. The convex portion of the recording layer is referred to as a "land R" (which is convex on the substrate 50), and the concave portion is referred to as the "groove G" (which is grooved in the substrate 50). A pit mark P is formed by an information recording apparatus or an information recording/reproducing apparatus onto the groove G. As shown in FIG. 3, the laser light is irradiated from the bottom (through the substrate 50 which is transparent) and is reflected by the reflecting layer 70 formed on top of the recording layer 60.

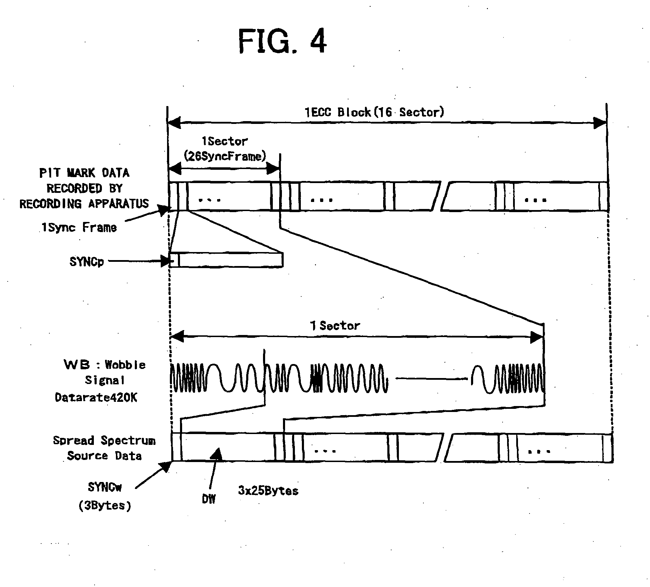

FIG. 4 shows spread spectrum source data together with pit mark data which is recorded by the recording apparatus or recording/reproducing apparatus. In the embodiment, the data unit of pit mark data DP to which an error-correcting code ECCp is appended is referred to as an "ECC block". One ECC block includes 16 sectors, and one sector includes 26 synchronization frames. A pit synchronization signal SYNCp is placed at the head of the synchronization frame. At the head of the spread spectrum source data, 3 bytes of the wobble synchronization signal SYNCw is placed, correspondingly to one sector of the pit mark data DP. Following this, 3 × 25 bytes of data is placed.

Next, various structural examples of the wobble signal generation circuit 20 will be explained in detail. As described above, the wobble signal WB is modulated such that the DC offset of the wobble signal WB is canceled by the symbol unit of spread spectrum data SS. Such modulation is broadly classified into the case where the wobble signal WB includes a plurality of frequency waveforms and the case where the wobble signal WB includes a single frequency waveform.

### <1-2: In the case where the wobble signal includes a plurality of frequency waveforms>

Firstly, the case of including a plurality of frequency waveforms will be explained.

### <1-2-1: First Structural Example of Wobble Signal Generation Circuit>

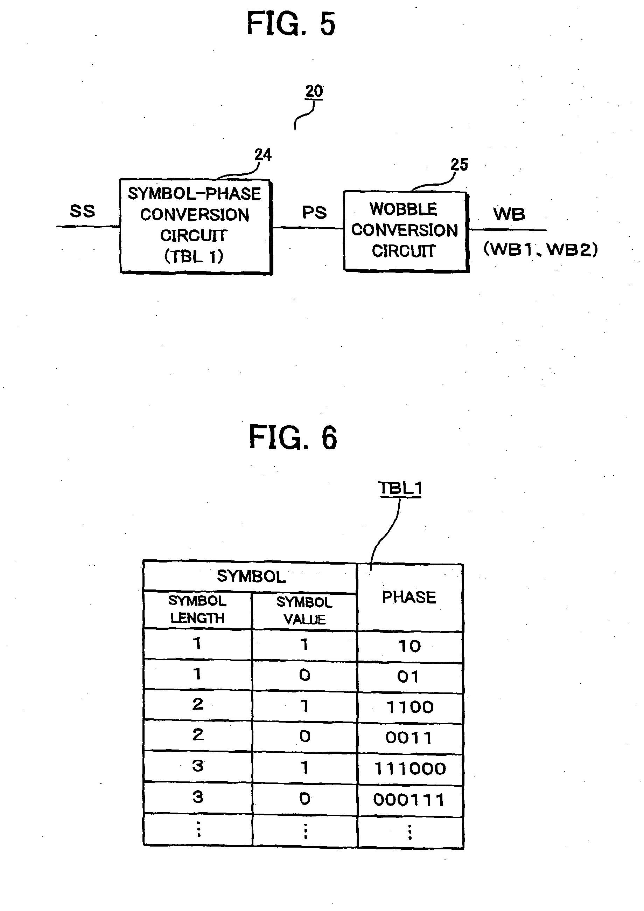

FIG. 5 shows the first structural example of the wobble signal generation circuit 20. The wobble signal generation circuit 20 in the first structural example is provided with: a symbol-phase conversion circuit 24; and a wobble conversion circuit 25, The symbol-phase conversion circuit 24 converts the spread spectrum data SS into phase modulation data PS by using a conversion table TBL1, As shown in FIG. 6, the symbol length and the symbol value of the spread spectrum data SS and the phase (or a symbol pattern) of the phase modulation data PS are related to each other and stored on the conversion table TBL1. The symbol means "1" or "0" of information. The phase modulation data PS is generated by the symbol unit of the spread spectrum data SS, and one symbol of the spread spectrum data SS is converted into a data pattern with a duty ratio of 50%.

The wobble conversion circuit 25 performs various processing with respect to the phase modulation data PS, to thereby generate the wobble signal WB. As the processing of the wobble conversion circuit 25, there are (1) a process of band-limiting, (2) a process of generating a signal waveform in which the symbol unit of the spread spectrum data SS is one wavelength, (3) a process of combining adjacent frequency waveforms whose polarities are the same, (4) a process of reversing the signal waveform by the symbol unit of the spread spectrum data SS, or the like. The wobble conversion circuit 25 combines and performs the processing if needed, to thereby generate the wobble signal WB.

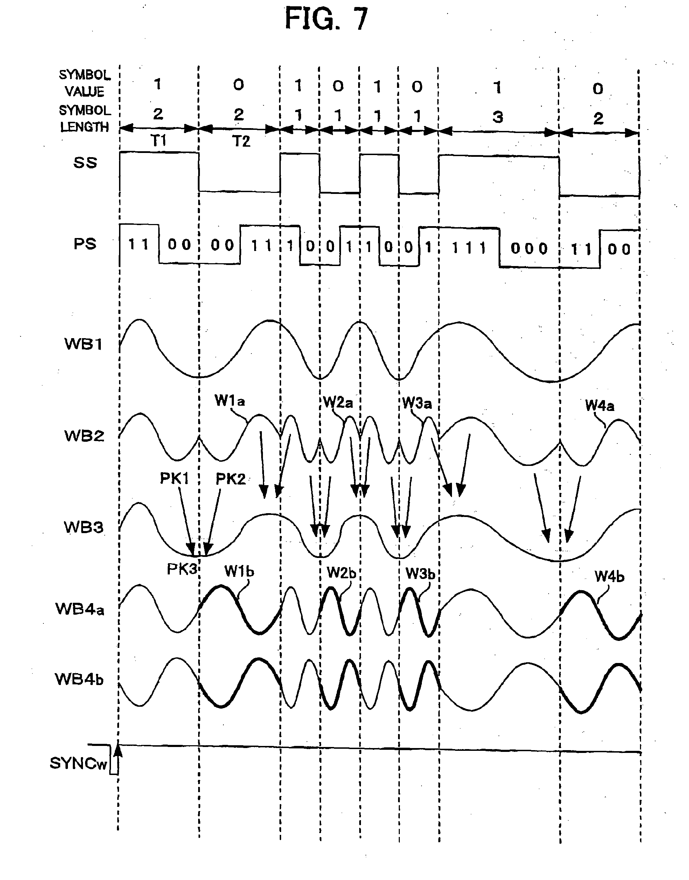

FIG. 7 is a timing chart of the wobble signal generation circuit 20. In the example shown in FIG. 7, in a term T1, the symbol value of the spread spectrum data SS is "1" and the symbol length of the spread spectrum data SS is "2", so that the phase modulation data PS with a phase of "1100" is generated by the conversion table TBL1. In a term T2, the symbol value of the spread spectrum data SS is "0" and the symbol length the spread spectrum data SS is "2", so that the phase modulation data PS with a phase of "0011" is generated by the conversion table TBL1, As described above, the symbol-phase conversion circuit 24 converts the spread spectrum data SS into the data pattern with a duty ratio of 50% by the symbol unit thereof, to thereby generate the phase modulation data PS.

If the wobble conversion circuit 25 is constructed from a band pass filter, a low pass filter, or the like and constructed so as to band-limit the data waveform of the phase modulation data PS, the wobble signal WB has a wobble signal waveform WB1 shown in FIG. 7. Since the phase modulation data PS is such that the spread spectrum data SS is converted by the symbol unit of the spread spectrum data SS into the data pattern with a duty ratio of 50%, the DC offset is canceled by the symbol unit of the spread spectrum data SS in the wobble signal waveform WB1.

Since the spread spectrum data SS is obtained by multiplying the first random data RND1 and the wobble data DW, "1" or "0" may continue in some combinations of the symbols. However, the wobble signal WB in the embodiment has such a waveform that the DC offset of the wobble signal WB is canceled by the symbol unit of the spread spectrum data SS. If the wobble of the groove G is formed according to the wobble signal WB, the tracking offset is dissolved or canceled by the symbol unit of the spread spectrum data SS. Therefore, tracking servo in reproducing is capable of returning the position of an optical pickup to the amplitude center of the wobble in a short time. As a result, it is possible to reduce the tracking error by jumping to an adjacent track and the crosstalk from the adjacent track, to thereby improve data reliability.

Next, if the wobble conversion circuit 25 generates a signal waveform so that the symbol unit of the spread spectrum data SS is one wavelength and that it has polarity corresponding to the symbol value of the phase modulation data PS, the wobble signal WB has a wobble signal waveform WB2 shown in FIG. 7. In this case, the DC offset of the wobble signal WB is canceled by the symbol unit of the spread spectrum data SS as well.

Next, after generating the wobble signal waveform WB2, the wobble conversion circuit 25 may generate the wobble signal WB by combining adjacent waveforms whose polarities are the same. In this case, the wobble signal WB has a signal waveform WB3 shown in FIG. 7. For example, a peak PK1 and a peak PK2 of the signal waveform WB2 are combined to be a peak PK3 of the waveform WB3.

Next, after generating the wobble signal waveform WB2, the wobble conversion circuit 25 may generate the wobble signal WB by reversing the wobble signal waveform WB2 by the symbol unit of the spread spectrum data SS. In this case, the wobble signal WB has a signal waveform WB4a, shown in FIG. 7. Specifically, the waveforms W1a, W2a, W3a, and W4a of the signal waveform WB2 are individually reversed to generate the waveforms W1b, W2b, W3b, and W4b of the signal waveform WB4, respectively. As described above, reversing the wobble signal waveform WB2 every other wavelength allows the smooth connection of the wobble signal WB. This makes it possible to smooth the wobble of the groove G formed on an optical disc, which can improve the accuracy of tracking servo in reproducing and reduce an error rate. Incidentally, the signal waveform WB4a is synchronized with the pit synchronization signal SYNCp. The waveform of the signal waveform WB4a starting from its leading or rising edge is maintained in its non-reversed condition, and the next waveform thereof is reversed. Thus, if the signal waveform WB2 shown in FIG. 7 is reversed, the wobble signal WB has a signal waveform WB4b shown in FIG. 7.

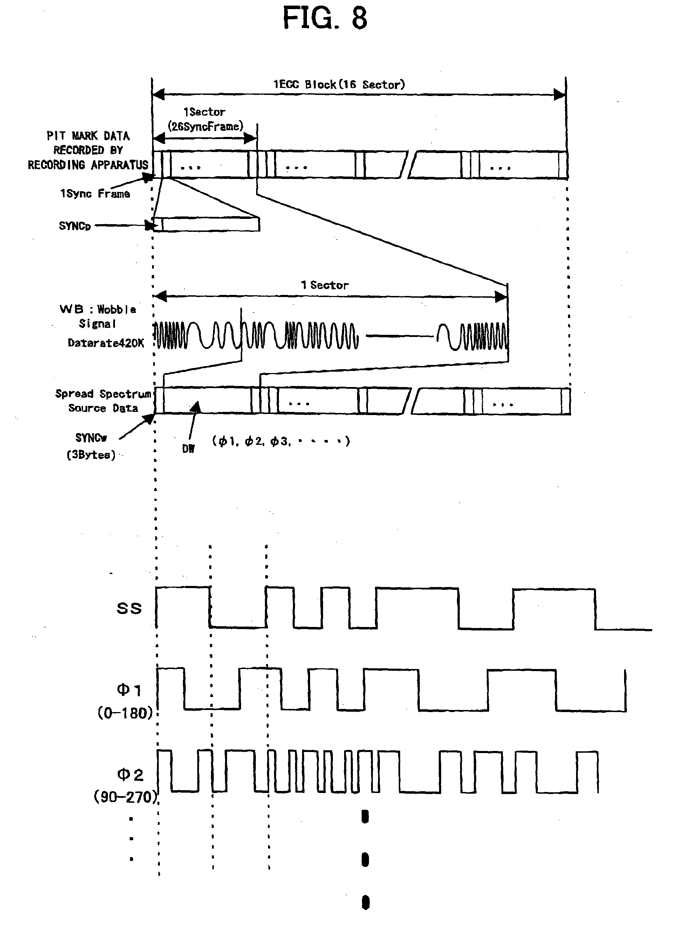

Incidentally, in the above-described first structural example, the symbol-phase conversion circuit 24 may generate the phase modulation data PS by switching over and phase-modulating a phase group corresponding to each symbol value of the spread spectrum data SS according to a predetermined rule. In this case, as shown in FIG. 8, the spread spectrum source data may sequentially switch over its phase, such as a phase group φ1 of 0 to 180 degrees and a phase group φ2 of 90 to 270 degrees. The predetermined rule may be such that the phase group is switched over for each of the predetermined number of data with the wobble synchronization signal SYNCw being as a reference. By switching over the phase group as described above, it is possible to further increase the concealment of the wobble data DW.

### <1-2-2: Second Structural Example of Wobble Signal Generation Circuit>

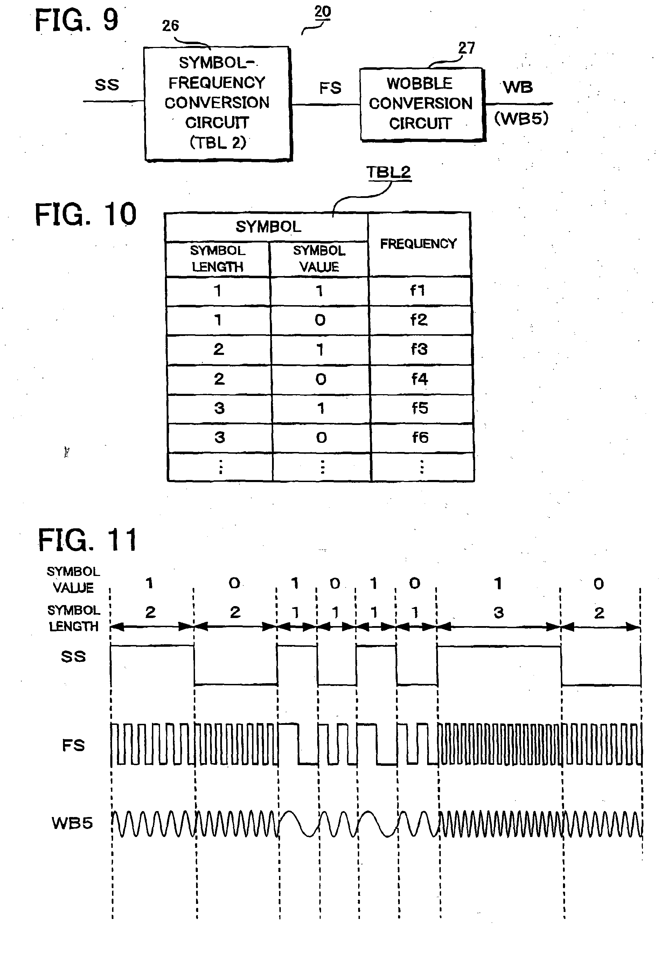

FIG. 9 shows the second structural example of the wobble signal generation circuit 20. The wobble signal generation circuit 20 is provided with: a symbol-frequency conversion circuit 26; and a wobble conversion circuit 27, The symbol-frequency conversion circuit 26 converts the spread spectrum data SS into frequency modulation data FS by using a conversion table TBL2. As shown in FIG. 10, the symbol length and the symbol value of the spread spectrum data SS and the frequencies f1, f2, f3... of the frequency modulation data FS are related to each other and stored on the conversion table TBL2. The frequency modulation data FS is generated by the symbol unit of the spread spectrum data SS. Incidentally, each of the frequencies f1, f2, f3... is selected such that the DC offset is canceled upon the conversion by the symbol unit of the spread spectrum data SS. For example, if the time length of the symbol length is Tx seconds and if the corresponding frequency is fx, Tx × fx = N (N: natural number). The wobble conversion circuit 27 is constructed from a band pass filter, a low pass filter, or the like, and it band-limits the frequency band of the frequency modulation data FS, to thereby generate the wobble signal WB.

FIG. 11 is a timing chart of the wobble signal generation circuit 20 shown in FIG. 9. If the spread spectrum data SS is supplied to the symbol-phase conversion circuit 26, the symbol-phase conversion circuit 26 refers to the conversion table TBL2 and specifies a frequency corresponding to the symbol length and the symbol value of the spread spectrum data SS, to thereby generate the frequency modulation data FS. The wobble conversion circuit 27 removes a high frequency component from the frequency modulation data FS and generates a band-limited wobble signal waveform WB5.

### <1-3; In the case where the wobble signal includes a single frequency waveform>

Secondly, the case of including a single frequency waveform will be explained.

### <1-3-1: Third Structural Example of Wobble Signal Generation Circuit>

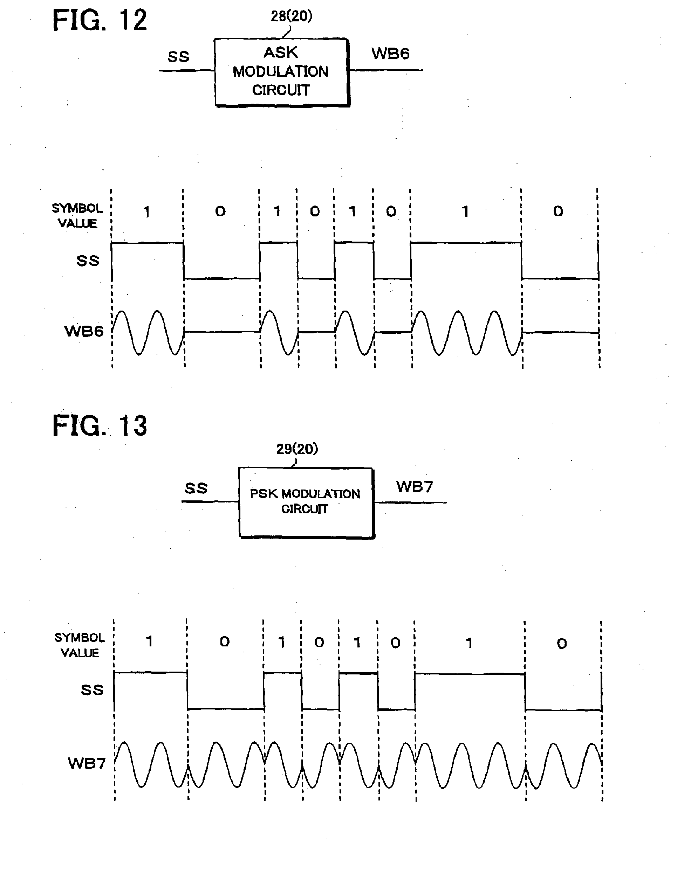

FIG. 12 shows the third structural example of the wobble signal generation circuit 20 and its timing chart. In the example, the wobble signal generation circuit 20 is constructed as an Amplitude-Shift Keying (ASK) modulation circuit 28. The ASK modulation circuit 28 is provided with a sine wave generation circuit for generating a sine wave synchronized with the spread spectrum data SS and amplitude-modulates the output signal of the sine wave generation circuit by the spread spectrum data SS. For example, the sine wave (or a carrier wave) may be generated by constructing the sine wave generation circuit from a band pass filter and by extracting the fundamental frequency component of the second clock signal CK2 from the band pass filter. By virtue of the ASK modulation circuit 28, such a wobble signal WB6 that the DC offset is canceled by the symbol unit of the spread spectrum data SS is obtained. Incidentally, by synchronizing the minimum reverse interval of the spread spectrum data SS with one cycle or period of the carrier wave, as shown in FIG. 12, it is possible to reduce the frequency of the wobble signal WB6.

### <1-3-2: Fourth Structural Example of Wobble Signal Generation Circuit>

Next, another example of the case where the wobble signal WB includes a single frequency waveform will be explained. FIG. 13 shows the fourth structural example of the wobble signal generation circuit 20 and its timing chart. In the example, the wobble signal generation circuit 20 is constructed as a Phase-Shift Keying (PSK) modulation circuit 29. The PSK modulation circuit 29 is provided with a two-phase carrier wave generation circuit, and selects the output signal of the two-phase carrier wave generation circuit by using the spread spectrum data SS, to thereby phase-modulate it. By virtue of the PSK modulation circuit 29, such a wobble signal WB7 that the DC offset is canceled by the symbol unit of the spread spectrum data SS is obtained.

In the embodiment, as described above, the wobble signal WB is generated by further modulating the spread spectrum data SS such that the DC offset of the wobble signal WB is canceled by the symbol unit of the spread spectrum data SS. Thus, the wobble of the groove G formed on the master disc DS converges onto the amplitude center thereof in a short time. Therefore, the wobble of the groove G corresponding to the wobble signal WB is formed on the optical disc 1 which is produced by using the master disc DS. The wobble is such that the DC offset converges in a short time. This reduces tracking error by track jumping and crosstalk from an adjacent track in reproducing the optical disc 1, to thereby improve data reliability.

### <2. Information Recording/Reproducing Apparatus>

### <2-1: Entire Structure of Information Recording/Reproducing Apparatus>

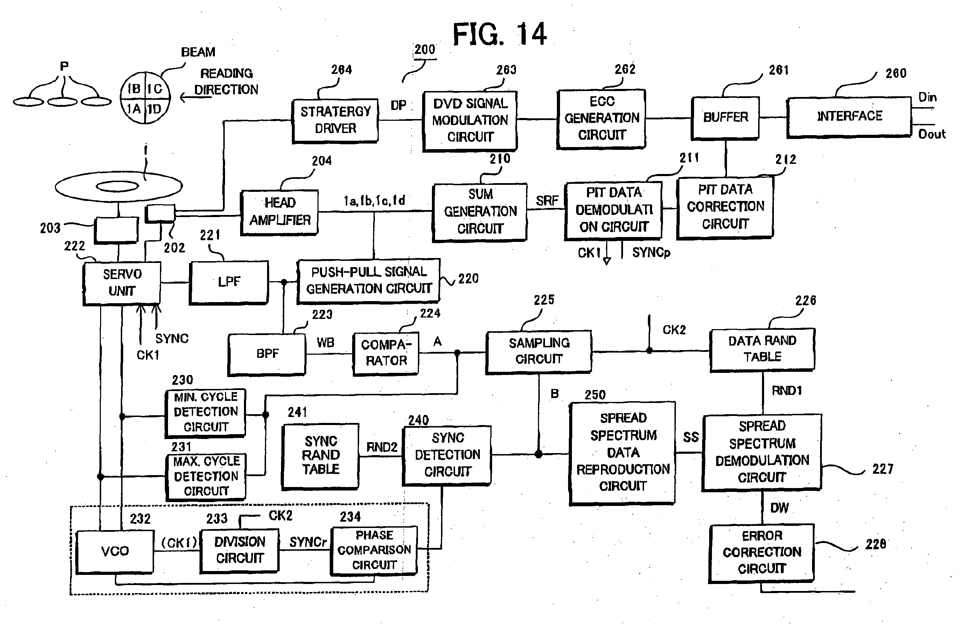

Next, the information recording/reproducing apparatus will be explained. FIG. 14 shows the entire structure of an information recording/reproducing apparatus 200. On the optical disc 1, the groove G, which meanders or wobbles with respect to the standard locus as described above, is formed as the wobble. The pit mark P is recorded onto the groove G in recording, while the pit mark P is read in reproducing.

The pit mark P corresponds to the pit mark data DP. The wobble of the groove G has a shape corresponding to the wobble signal WB. The pit mark data DP is synchronized with the first clock signal CK1. The wobble signal WB is synchronized with the second clock signal CK2. The first clock signal CK1 has a frequency N times (N: natural number) as large as that of the second clock signal CK2. In the embodiment, N = 25, the frequency of the second clock signal CK2 is 420 KHz, and the frequency of the first clock signal CK1 is 10.5 MHz.

The information recording/reproducing apparatus 200 is provided with: an optical pickup 202 for irradiating a record/reproduction beam onto the optical disc 1 and for outputting a signal corresponding to reflected light; a spindle motor 203 for controlling the rotation of the optical disc 1; and a servo unit 222. The first clock signal CK1 and the pit synchronization signal SYNCp are supplied to the servo unit 222. In synchronization with these signals, the servo unit 222 performs spindle servo for controlling the rotation of the spindle motor 203 and focus servo and tracking servo for controlling the relative position of the optical pickup 202 with respect to the optical disc 1.

At first, the main structure of a recording system will be explained. The input data Din taken through an interface 260 is once stored into a buffer 261 and then supplied to an ECC generation circuit 262. After scrambling in which the data order of the input data Din is rearranged according to a preset rule, the ECC generation circuit 262 generates an error-correcting code and appends it to the scrambled input data Din. A DVD signal modulation circuit 263 modulates the output data of the ECC generation circuit 262, to thereby generate the pit mark data DP. The pit synchronization signal SYNCp generated on a not-illustrated SYNC timing generation circuit is appended to the pit mark data DP. A storage driver 264 generates a drive signal for controlling laser power according to a pit pattern of the pit mark data DP, and supplies the generated drive signal to the optical pickup 202.

The optical pickup 202 is provided with: a laser diode for irradiating the record/reproduction beam; and a four-division detection circuit (not-illustrated). The four-division detection circuit divides by 4 the reflected light of the reproduction beam into areas 1A, 1B, 1C, and 1D shown in FIG. 14, and outputs each signal corresponding to the quantity of light in respective one of the areas. A head amplifier 204 amplifies each output signal of the optical pickup 202, and outputs a divisional read signal 1a corresponding to the area 1A, a divisional read signal 1b corresponding to the area 1B, a divisional read signal 1c corresponding to the area 1C, and a divisional read signal 1d corresponding to the area 1D. Incidentally, the optical pickup 202 and the head amplifier 204 correspond to the above-described "reading device".

A push-pull signal generation circuit 220 calculates (1a + 1d) - (1b + 1c) and generates a push-pull signal. The component (1a + 1d) corresponds to the areas 1A and 1D which are on the left side with respect to the reading direction, while the component (1b + 1c) corresponds to the areas 1B and 1C which are on the right side with respect to the reading direction. Namely, if the reproduction beam inclines to the left side with respect to the pit, the push-pull signal will have positive polarity with the amplitude center thereof as a standard. If the reproduction beam is positioned in the center of the pit, the value of the push-pull signal will be in the amplitude center thereof. If the reproduction beam inclines to the right side with respect to the pit, the push-pull signal will have negative polarity with the amplitude center thereof as a standard. The relative position between the reproduction beam and the pit changes according to the meandering or wobbling of the track, and the value of the push-pull signal represents the relative position between the reproduction beam and the pit. Namely, the push-pull signal is a signal corresponding to the meandering or wobbling of the groove G.

The push-pull signal is outputted through a low pass filter 221 to the servo unit 222. The servo unit 222 performs tracking control on the basis of the push-pull signal. Since the optical disc 1 in the embodiment is produced by using the master disc DS which is made by the above-described mastering apparatus 100, the DC offset of the wobble is canceled by a predetermined symbol unit of the spread spectrum data SS. Therefore, it is possible to return the position of the optical pickup 202 to the standard locus in a short time in tracking servo. As a result, it is possible to reduce tracking error by jumping to an adjacent track and crosstalk from the adjacent track, to thereby improve data reliability.

Next, the main structure of a reproducing system will be explained. A sum generation circuit 210 is constructed from an addition circuit for adding the divisional read signals 1a, 1b, 1c, and 1d and for outputting a sum read signal SRF. Incidentally, the sum read signal SRF represents the length of a record mark formed on the groove G.

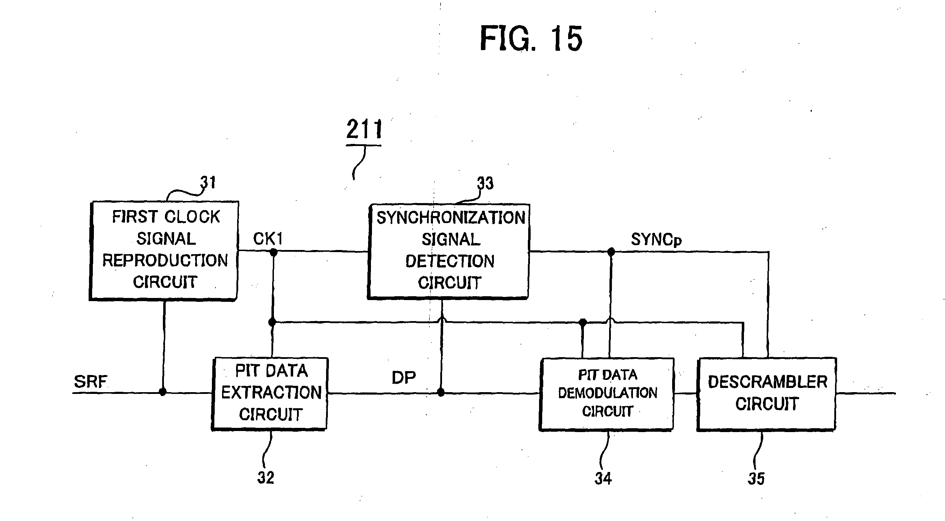

In reproducing information recorded on the optical disc 1, A pit data demodulation circuit 211 reproduces the pit mark data DP and generates the first clock signal CK1 on the basis of the sum read signal SRF. FIG. 15 shows the structure of the pit data demodulation circuit 211. As shown in FIG. 15, the pit data demodulation circuit 211 is provided with: a first clock signal reproduction circuit 31; a pit data extraction circuit 32; a synchronization signal detection circuit 33; a pit data demodulation circuit 34; and a descrambler circuit 35.

The first clock signal reproduction circuit 31 reproduces the first clock signal CK1 synchronized with the pit mark data DP, on the basis of the sum read signal SRF. The pit data extraction circuit 32 samples, with the first clock signal CK1, a binary signal obtained by binarizing the sum read signal SRF and reproduces the pit mark data DP.

The synchronization signal detection circuit 33 detects a synchronization pattern included in the reproduced pit mark data DP and generates the pit synchronization signal SYNCp. The synchronization pattern is a particular data pattern which is not included in other pit mark data, and has a constant cycle. The pit synchronization signal SYNCp indicates the timing of the synchronization pattern.

The pit data demodulation circuit 34 generates reproduction data by demodulating the reproduced pit mark data DP with a predetermined table, with the pit synchronization signal SYNC being as a reference position. For example, if Eight to Fourteen Modulation (EFM) is used as a modulating method, the demodulation processing is performed in which 14 bits of the pit mark data DP is converted into 8 bits of the reproduction data. The descrambler circuit 35 performs descrambling in which the order of the reproduction data is rearranged according to a preset rule, and outputs the processed reproduction data.

The reproduction data obtained in this manner is supplied to a pit data error correction circuit 212 shown in FIG. 14, and after error correcting and interpolating therein, it is stored into the buffer 261. The interface 260 sequentially reads the data stored in the buffer 261, converts it into a predetermined output form, and outputs it to external equipment as output data Dout.

Out of the servos in the reproducing system, tracking servo is performed in the same manner as in the above-described recording system. On the other hand, the number of rotations of the optical disc 1 is controlled by spindle servo as follows. At first, the push-pull signal is supplied to a band pass filter 223, The pass band of the band pass filter 223 is set to extract the wobble signal WB obtained in recording from the push-pull signal. Therefore, the band pass filter 223 constitutes the above-described "wobble signal generating device" with the push-pull signal generation circuit 220, and the output signal of the band pass filter 223 is such as to reproduce the wobble signal WB from the optical disc 1.

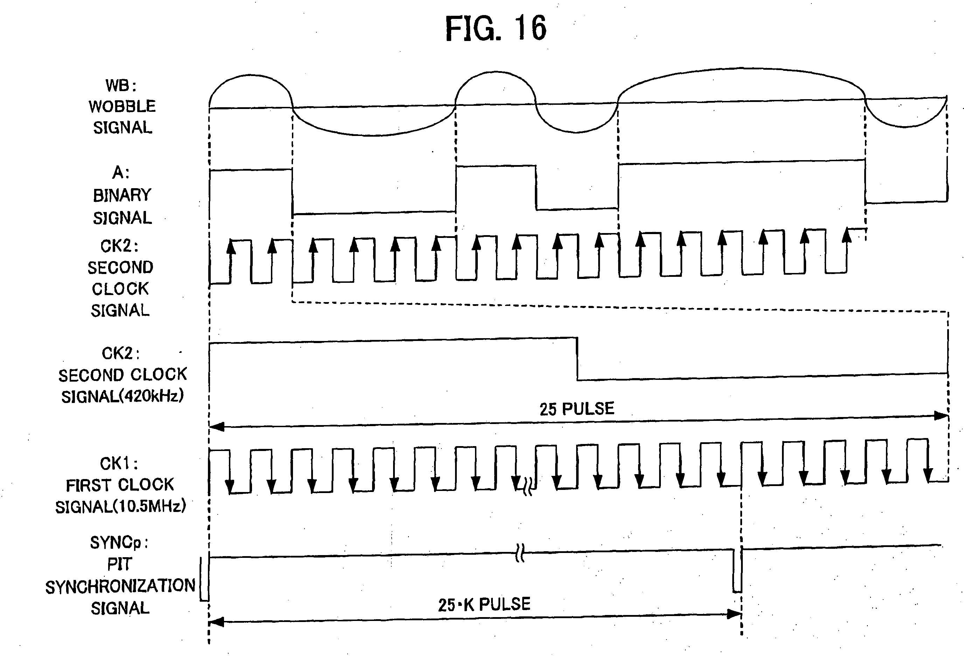

FIG. 16 shows a timing chart of the wobble signal WB, a binary signal A, the first clock signal CK1, the second clock signal CK2, and the pit synchronization signal SYNCp (which has the same timing as the wobble synchronization signal SYNCw). A comparator 224 outputs the binary signal A obtained by binarizing the wobble signal WB. Since the wobble signal WB has a low frequency, the inclination of its waveform near zero crossing is relatively mild. Thus, the binary signal A has a large jitter component. A sampling circuit 225 samples the binary signal A by using the second clock signal CK2 and extracts the data, to thereby reproduce reproduction data B. Incidentally, the comparator 224 and the sampling circuit 225 correspond to the above-described "data reproducing device".

Back in FIG 14, the explanation goes on. A spread spectrum data reproduction circuit 250 reproduces the spread spectrum data SS on the basis of the reproduction data B. The detail of the spread spectrum data reproduction circuit 250 varies depending on what type of modulating method is used upon making the master disc DS. This point will be described later.

The binary signal A outputted from the comparator 224 is supplied to a minimum cycle detection circuit 230 and a maximum cycle detection circuit 231. The minimum cycle detection circuit 230 measures the mean value of the minimum cycle of the binary signal A (hereinafter referred to as a "minimum mean value"), while the maximum cycle detection circuit 231 measures the mean value of the maximum cycle of the binary signal A (hereinafter referred to as a "maximum mean value"). The minimum mean value and the maximum mean value are supplied to the servo unit 222 and a VCO 232.

The VCO 232 is a Voltage Controlled Oscillator, and constitutes a digital Phase Locked Loop (PLL) together with the division circuit 233 and a phase comparison circuit 234. The fundamental frequency range of the digital PLL is set by using the minimum mean value and the maximum mean value. This prevents the output frequency of the VCO 232 from being off frequency (i,e. shifting to too high or too low frequency), to thereby improve frequency stability.

The output frequency of the VCO 232 is the same as the frequency of the first clock signal CK1. The division circuit 233 frequency-divides the output signal (i.e. CK1) of the VCO 231, and generates the second clock signal CK2 and a reference synchronization signal SYNCr. The phase comparison circuit 234 compares the phase of the reference synchronization signal SYNCr with the phase of the reproduced wobble synchronization signal SYNCw, to thereby generate an error signal, and then sends feedback about this to the VCO 233, In this manner, the number of rotations of the optical disc 1 is controlled, and the second clock signal CK2 synchronized with the wobble data DW is reproduced.

A random pattern used for the spread spectrum modulation in recording is stored on a data RAND table 226. The random pattern corresponds to a "spread code" and is a bit row generated by using a random function. The second clock signal CK2 is supplied to the data RAND table 226. By reading the random pattern in synchronization with the second clock signal CK2, the first random data RND1 is generated. The generated first random data RND1 is supplied to a spread spectrum demodulation circuit 227.

The spread spectrum demodulation circuit 227 is provided with a multiplication circuit (e.g. the XOR circuit). The spread spectrum data SS outputted from the spread spectrum data reproduction circuit 250 is multiplied with the first random data RND1 on the multiplication circuit. By this, the wobble data DW is reproduced. In this case, a signal which is not within an original signal band is converted into a signal which is out of the band by the multiplication, The wobble data DW reproduced in this manner is outputted after error correcting on an error correction circuit 228.

A sync detection circuit 240 and a sync RAND table 241 are disposed in parallel with the spread spectrum demodulation circuit 227. A random pattern in recording is stored in the sync RAND table 241. The second clock CK2 is supplied to the sync RAND table 241. By reading the random pattern in synchronization with the second clock signal CK2, the second random data RND2 is generated. The generated second random data RND2 is supplied to the sync detection circuit 240. The sync detection circuit 240 matches (i) a synchronization pattern obtained by derandomizing the reproduction data B by using the second random data RND2 and (ii) a synchronization pattern stored in advance, to thereby reproduce the wobble synchronization signal SYNCw. The reproduced wobble synchronization signal SYNCw is supplied to the error correction circuit 228 and the spread spectrum data reproduction circuit 250. By this, the head of the data is judged or determined.

Next, the detailed structure and operation of the spread spectrum data reproduction circuit 250 will be explained correspondingly to the above-described structure of the mastering apparatus 100. The detailed structure and operation of the spread spectrum data reproduction circuit 250 is broadly classified into the case where the wobble signal WB includes a plurality of frequency waveforms and the case where the wobble signal WB includes a single frequency waveform.

### <2-2: In the case where the wobble signal includes a plurality of frequency waveforms>

Firstly, the case where the wobble signal WB includes a plurality of frequency waveforms will be explained. Namely, it is the case where the signal waveforms of the wobble signal WB upon recording are WB1 to WB4a and WB4b shown in FIG. 7 and WB5 shown in FIG. 11.

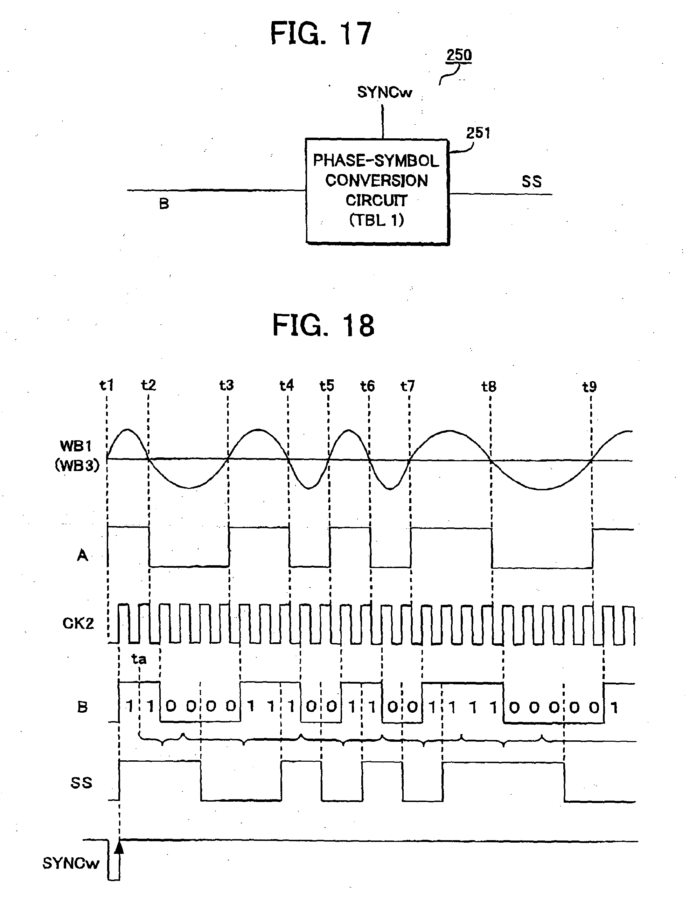

If the wobble signal WB upon recording has the signal waveform WB1 or WB3 shown in FIG. 7, the spread spectrum data reproduction circuit 250 is constructed from a phase-symbol conversion circuit 251 shown in FIG. 17, and its timing chart is such as shown in FIG. 18. The phase-symbol conversion circuit 251 has a complementary relationship with the symbol-phase conversion circuit 24 of the mastering apparatus 100, and is provided with the conversion table TBL1 shown in FIG. 6. The phase-symbol conversion circuit 251 refers to the conversion table TBL1 and converts the phase (or the data pattern) of the reproduction data B into a symbol, to thereby generate the spread spectrum data SS.

For example, as shown in FIG. 18, if the signal waveform of the reproduced wobble signal WB zero-crosses at time points t1 to t9, the logical level of the binary signal A transits at the time points t1 to t9. Since the sampling circuit 225 latches the binary signal A at the leading edge of the second clock signal CK2, the reproduction data B delays by the half cycle of the second clock signal CK2 with respect to the binary signal A as shown in FIG. 18.

In order to perform phase-symbol conversion with respect to the reproduction data B obtained in this manner, it is necessary to determine a phase reference (or a delimiter for the data pattern). For example, if the time point t1 is set to be the phase reference, the phase of the reproduction data B changes like (1100) → (0011) → (10) → (01) ... or the like. On the other hand, if a time point ta is set to be the phase reference, the phase of the reproduction data B changes like (10) → (000111) → (0011) → (0011) ... or the like.

In the above-described mastering apparatus 100, the phases of the phase modulation data PS and the wobble synchronization signal SYNCw are adjusted so that the leading edge of the phase modulation data PS agrees with the leading edge of the wobble synchronization signal SYNCw as shown in FIG. 7. The phase-symbol conversion circuit 251 obtains the phase reference by the wobble synchronization signal SYNCw. Specifically, the spread spectrum data SS is reproduced by identifying the phase of the reproduction data B with the leading edge of the wobble synchronization signal SYNCw as being the phase reference and by generating a symbol corresponding to the identified phase by using the conversion table TBL1. Incidentally, in the embodiment shown in FIG. 18, the wobble synchronization signal SYNCw rises at the time point t1, so that the time point t1 is the phase reference. Incidentally, Moreover, the wobble synchronization signal SYNCw may be appended after spread spectrum modulation or appended before spread spectrum modulation.

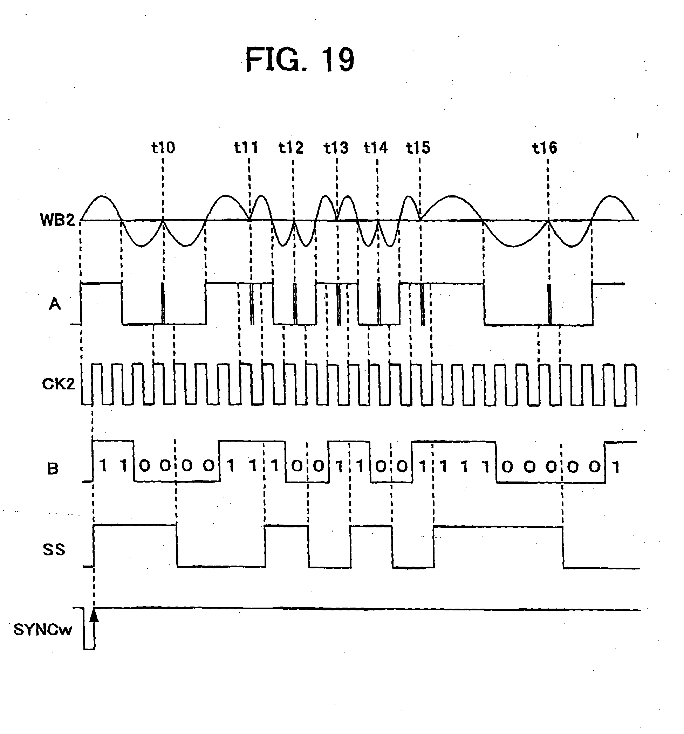

Next, the case where the wobble signal WB upon recording has the signal waveform WB2 shown in FIG. 7 will be explained. In this case, the spread spectrum data reproduction circuit 250 is constructed from the phase-symbol conversion circuit 251 shown in FIG. 17, and its timing chart is such as shown in FIG. 19. If the wobble signal WB2 zero-crosses as shown in FIG. 19, the logical level of the binary signal A transits at the timing of the zero-crossing. At time points t10 to t16, the phase of the signal waveform changes by 180 degrees, so that the binary signal A becomes a pulse-like noise in some cases. However, since the sampling circuit 225 latches the binary signal A at the leading edge of the second clock signal CK2, it is possible to obtain the reproduction data B with the noise removed. The frequency waveform of this reproduction data B is the same as that of the reproduction data B shown in FIG. 18, so that it is possible to reproduce the spread spectrum data SS as in the above-described case where the wobble signal WB upon recording has the waveforms WB1 and WB3.

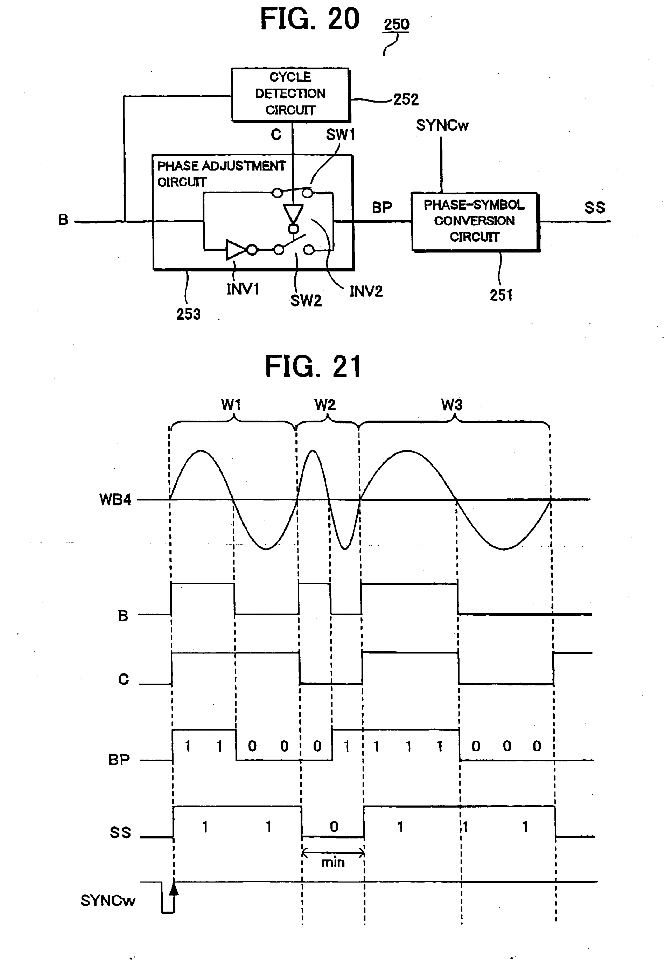

Next, the case where the wobble signal WB upon recording has the signal waveform WB4a or WB4b shown in FIG. 7 will be explained. In this case, as shown in FIG. 20, the spread spectrum data reproduction circuit 250 is provided with: the phase-symbol conversion circuit 251; a cycle detection circuit 252; and a phase adjustment circuit 253, and its timing chart is such as shown in FIG. 21.

The cycle detection circuit 252 is constructed from a 1/2 division circuit and frequency-divides the reproduction data B by 2, thereby to output a cycle detection signal C. The high level term and the low level term of the cycle detection signal C individually correspond to one cycle of each of the frequency waveforms w1, w2, and w3 which constitute the wobble signal WB4.

The phase adjustment circuit 253 maintains the logical level of the reproduction data B in a term in which the cycle detection signal C is at a high level, while reversing the logical level of the reproduction data B in a term in which the cycle detection signal C is at a low level, and outputs reproduction data BP. The phase adjustment circuit 253 is provided with: inverters INV1 and INV2; and switches SW1 and SW2. The switches SW1 and SW2 are on when the input voltages of control terminals are at a high level, and they are off when the input voltages are at a low level. The cycle detection signal C is directly supplied to the control terminal of the switch SW1, while the cycle detection signal C is supplied to the control terminal of the switch SW2 through the inverter INV2. Therefore, the switches SW1 and SW2 perform a toggle operation. The switch SW1 is on in the term in which the cycle detection signal C is at a high level, and the switch SW2 is on in the term in which the cycle detection signal C is at a low level.

The phase-symbol conversion circuit 251 refers to the conversion table TBL1 and reproduces the spread spectrum data SS from the reproduction data BP. The operation of the phase-symbol conversion circuit 251 is the same as in the above-described case where the wobble signal WB upon recording has the waveforms WB1 and WB3.

By the way, a rule of reversing the waveforms constituting the wobble signal WB4 upon recording is such that the frequency waveform upon the occurrence of the leading edge of the wobble synchronization signal SYNCw is in non-reverse rotation, that the next waveform is in reverse rotation, and that afterwards the non-reverse rotation and the reverse rotation are repeated sequentially. In the above-described phase adjustment circuit 253, the normal and reverse rotations are alternately repeated on the basis of the cycle detection signal C, but a phase synchronized with the wobble synchronization signal SYNCw is not adjusted. Therefore, there is the possibility that correct data is such that the reproduction data BP outputted from the phase adjustment circuit 253 is reversed. If the correct data is such that the reproduction data BP is reversed, it is necessary to reverse the spread spectrum data SS. Thus, the spread spectrum demodulation circuit 227 described below is designed to demodulate the correct data.

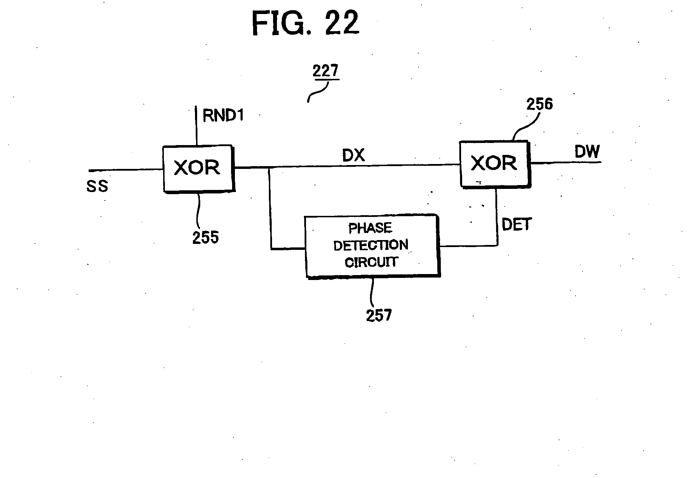

FIG. 22 is a block diagram of the spread spectrum demodulation circuit 227 used in the case where the wobble signal waveform WB upon recording has the signal waveform WB4 shown in FIG. 7. In this case, the spread spectrum demodulation circuit 227 is provided with: exclusive OR circuits (referred to as XOR circuits 5 hereinafter) 255 and 256; and a phase detection circuit 257.

The XOR circuit 255 multiplies the spread spectrum data SS and the first random data RND1, to thereby generate data DX. If the logical level of the spread spectrum data SS is correct, the data DX is the wobble data DW. On the other hand, if the logical level of the spread spectrum data SS is wrong and that the reverse thereof is the correct spread spectrum data SS, the reverse of the data DX is the correct wobble data DW. The XOR circuit 255 corresponds to the above-described "reproduction data generating device".

The phase detection circuit 257 judges or determines the 5 correct or wrong of the logical level of the spread spectrum data SS and generates a detection signal DET which is at a low level if it is correct and which is at a high level if it is wrong.

More specifically, the phase detection circuit 257 is provided with: a table for storing the synchronization pattern as being the bit row of the synchronization signal included in the spread spectrum data SS; a first judgment circuit for judging whether or not a bit row agreeing with the synchronization pattern is included in the data DX and for outputting a first judgment signal; a second judgment circuit for judging whether or not a bit row agreeing with the synchronization pattern is included in reversed data obtained by reversing the data DX and for outputting a second judgment signal; and a detection signal generation circuit for making the detection signal DET low-level if the first judgment signal is active and the second judgment signal is inactive and for making the detection signal DET high-level if the first judgment signal is inactive and the second judgment signal is active. In other words, the phase detection circuit 257 detects a correct phase on the basis of the synchronization signal included in the spread spectrum data SS and corresponds to the above-described "polarity detecting device". The XOR circuit 256 adjusts the polarity of the data DX so as to set the polarity of the wobble synchronization signal SYNCw to be correct predetermined polarity on the basis of the detection signal DET and generates the wobble data DW. This makes it possible to accurately reproduce the wobble data DW even if the wobble signal WB upon recording has either the signal waveform WB4a or WB4b shown in FIG. 7.

Incidentally, as explained with reference to FIG. 8, the symbol-phase conversion circuit 24 may switch over and phase-modulate the phase group corresponding to each symbol value of the spread spectrum data SS according to a predetermined rule, thereby to generate the phase modulation data PS, and the wobble signals WB1 to WB4 upon recording may be generated on the basis of the generated phase modulation data PS. In the case of reproducing information from the optical disc 1 on which the wobble of the groove G is formed according to such wobble signals WB1 to WB4, the above-described phase-symbol conversion circuit 251 may switch over the symbol value corresponding to the phase group according to the above-described predetermined rule and reproduce the spread spectrum data SS. In this case, if the predetermined rule is such that the phase group is switched over for each of the predetermined number of data with the wobble synchronization signal SYCNw being as a reference, the spread spectrum data SS may be reproduced by changing the relationship between the symbol value and the phase group for each of the predetermined number of data with the reproduced wobble synchronization signal SYNCw being as the reference. Switching over the phase group as described above makes difficult the recovery of the wobble data DW, so that it is possible to further increase the concealment of the wobble data DW.

Next, the case where the wobble signal WB upon recording has the signal waveform WB5 shown in FIG. 11 will be explained. In this case, the spread spectrum data reproduction circuit 250 is constructed from a frequency-symbol conversion circuit. The frequency-symbol conversion circuit has a complementary relationship with symbol-frequency conversion circuit 26 shown in FIG. 9 and is provided with the conversion table TBL2 shown in FIG. 10. If the reproduction data B is supplied to the frequency-symbol conversion circuit, the frequency of the reproduction data B is detected. By referring to the conversion table TBL2 on the basis of the detection result, the spread spectrum data SS is reproduced.

### <2-3: In the case where the wobble signal includes a single frequency waveform>

Secondly, the case where the wobble signal WB includes a single frequency waveform will be explained. Namely, this is the case where the wobble signal WB upon recording has the signal waveform WB6 shown in FIG. 12 and the signal waveform WB7 shown in FIG. 13. If the wobble signal WB upon recording has the signal waveform WB6 shown in FIG. 12, the spread spectrum data reproduction circuit 250 is constructed from a known ASK demodulation circuit. The ASK demodulation circuit demodulates a binary signal B and reproduces the spread spectrum data SS. If the wobble signal WB upon recording has the signal waveform WB7 shown in FIG. 13, the spread spectrum data reproduction circuit 250 is constructed from a known PSK demodulation circuit. The PSK demodulation circuit demodulates the binary signal B and reproduces the spread spectrum data SS.

## Claims

1. An information recording medium (1) **characterized in that**, on said information recording medium, a groove (G) is formed at a displaced position to which the groove is displaced in a direction crossing a reading direction of the groove according to a wobble signal (WB) obtained by modulating predetermined data in a predetermined modulating method, wherein
the wobble signal is modulated such that a DC offset of the wobble signal is cancelled by a symbol unit of the predetermined data.

2. The information recording medium (1) according to claim 1, **characterized in that** the predetermined data is spread spectrum data (SS) obtained by performing spread spectrum modulation with respect to predetermined information.

3. The information recording medium (1) according to claim 1 or 2, **characterized in that** the predetermined modulating method is such that the wobble signal (WB) is generated by converting each symbol of the predetermined data into a frequency waveform corresponding to a symbol length of the each symbol.

4. The information recording medium (1) according to claim 3, **characterized in that** the predetermined modulating method is such that a phase of the frequency waveform is determined according to each symbol value of the predetermined data.

5. The information recording medium (1) according to claim 3 or 4, **characterized in that** the frequency waveform is a waveform with a duty ratio of 50% in which the symbol length of each symbol in the predetermined data is one cycle.

6. The information recording medium (1) according to any one of claims 3 to 5, **characterized in that** the frequency waveform is reversed for each symbol in the predetermined data,

7. The information recording medium (1) according to claim 4, wherein a phase of the frequency waveform determined according to each symbol value of the predetermined data is switched over according to a predetermined rule.

8. The information recording medium (1) according to claim 1 or 2, **characterized in that** the predetermined modulating method is such that the wobble signal (WB) is generated by converting each symbol of the predetermined data into a frequency waveform corresponding to a symbol length of the each symbol, and by combining frequency waveforms whose polarities are same to each other among the frequency waveforms adjacent to each other,

9. The information recording medium (1) according to claim 1 or 2, **characterized in that** the predetermined modulating method is such that the wobble signal (WB) is generated by converting each symbol of the predetermined data into a frequency waveform corresponding to a symbol length and a symbol value of the each symbol.

10. The information recording medium (1) according to claim 1 or 2, **characterized in that** the predetermined modulating method is such that the wobble signal (WB) is generated by adjusting an amplitude of a predetermined frequency waveform according to each symbol value of the predetermined data.

11. The information recording medium (1) according to claim 1 or 2, **characterized in that** the predetermined modulating method is such that the wobble signal (WB) is generated by adjusting a phase of a predetermined frequency waveform according to each symbol value of the predetermined data.

12. An information recording/reproducing apparatus (200) for recording a record mark onto a groove (G) formed on an information recording medium and reproducing predetermined information from said information recording medium (1), on which the groove is formed at a displaced position to which the groove is displaced in a direction crossing a reading direction of the groove according to a wobble signal (WB) obtained by further modulating spread spectrum data (SS), which is obtained by performing spread spectrum modulation with respect to the predetermined information, in a predetermined modulating method in which a DC offset of the wobble signal is canceled by a symbol unit of the spread spectrum data, **characterized in that** said information recording/reproducing apparatus comprises:
a reading device (202, 204) for reading the record mark from the groove recorded on said information recording medium;
a wobble signal generating device (220, 223) for generating a wobble signal for indicating the displaced position of the groove on the basis of an output signal from said reading device;
a spread spectrum data reproducing device (250) for reproducing the spread spectrum data by demodulating the generated wobble signal in a predetermined demodulating method which makes a pair with the predetermined modulating method; and
a spread spectrum data demodulating device (227) for reproducing the predetermined information by performing inverse-spread spectrum modulation with respect to the reproduced spread spectrum data.

13. The information recording/reproducing apparatus (200) according to claim 12, **characterized in that**
the predetermined modulating method is such that the wobble signal (WB) is generated by converting each symbol of the spread spectrum data (SS) into a frequency waveform having a frequency corresponding to a symbol length of the each symbol and having a phase corresponding to a symbol value of the each symbol, and
said spread spectrum data reproducing device (250) reproduces the spread spectrum data on the basis of the frequency and the phase of each frequency waveform constituting the wobble signal generated by said wobble signal generating device (220, 223).

14. The information recording/reproducing apparatus (200) according to claim 12, **characterized in that**
the predetermined information includes a particular signal in a particular pattern,
the predetermined modulating method is such that the wobble signal (WB) is generated by reversing, for each symbol, a waveform in which a symbol length of the each symbol of the spread spectrum data (SS) is one cycle, and
said spread spectrum data demodulating device (227) reproduces the predetermined information so that, by detecting a polarity of the particular signal included in the reproduced predetermined information, the detected polarity be a predetermined polarity.

15. The information recording/reproducing apparatus (200) according to claim 14, **characterized in that**
the particular signal is a synchronization signal (SYNCw, SYNCp) included in the predetermined information, and
said spread spectrum data demodulating device (227) comprises:
a random data generating device for generating random data used for the spread spectrum modulation of the predetermined information;
a reproduction data generating device (255) for generating reproduction data by performing inverse-spread spectrum modulation with respect to the reproduced spread spectrum data on the basis of the generated random data;
a polarity detecting device (257) for detecting a polarity of the synchronization signal included in the reproduction data; and
a polarity adjusting device (256) for adjusting a polarity of the reproduction data so that the polarity of the synchronization signal be a predetermined polarity on the basis of the detection result of said detecting device, to thereby output the predetermined information,

16. An information reproducing method of reproducing predetermined information from an information recording medium (1), which comprises a groove having a record mark formed thereon and on which the groove is formed at a displaced position to which the groove is displaced in a direction crossing a reading direction of the groove according to a wobble signal (WB) obtained by further modulating spread spectrum data (SS), which is obtained by performing spread spectrum modulation with respect to the predetermined information, in a predetermined modulating method in which a DC offset of the wobble signal is canceled by a symbol unit of the spread spectrum data, **characterized in that** said information reproducing method comprises:
a reading process of reading the record mark from the groove recorded on said information recording medium;
a wobble signal generating process of generating a wobble signal for indicating the displaced position of the groove on the basis of an output signal in said reading process;
a spread spectrum data reproducing process of reproducing the spread spectrum data by demodulating the generated wobble signal in a predetermined demodulating method which makes a pair with the predetermined modulating method; and
a spread spectrum data demodulating process of reproducing the predetermined information by performing inverse-spread spectrum modulation with respect to the reproduced spread spectrum data.
